(19) Europäisches Patentamt / European Patent Office / Office européen des brevets

(11) **EP 1 734 351 B1**

(12) **FASCICULE DE BREVET EUROPEEN**

(45) Date de publication et mention
de la délivrance du brevet:
**22.02.2017 Bulletin 2017/08**

(51) Int Cl.:
**G01M 3/28** *(2006.01)*        **G01M 3/32** *(2006.01)*
**G01M 3/26** *(2006.01)*

(21) Numéro de dépôt: **06115364.9**

(22) Date de dépôt: **13.06.2006**

(54) **Procédé et système d'évaluation de l'étanchéité d'un dispositif de stockage de gaz carburant sous haute pression**

Vorrichtung und Verfahren zur Untersuchung der undichten Stellen eines Brennkraftgaslagers unter hohen Druck

Procedure and evalutaion system of leakages in a device for storing gas for fuelling purposes under high pressure

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.06.2005 FR 0506109**

(43) Date de publication de la demande:
**20.12.2006 Bulletin 2006/51**

(73) Titulaire: **ENGIE**
**92400 Courbevoie (FR)**

(72) Inventeur: **COURRIEU, Olivier**
**75010, PARIS (FR)**

(74) Mandataire: **Desormiere, Pierre-Louis et al**
**Cabinet Beau de Loménie**
**158, rue de l'Université**
**75340 Paris Cedex 07 (FR)**

(56) Documents cités:
**WO-A-02/086437     JP-A- 1 073 233**
**US-A- 2 979 939      US-A- 4 269 061**
**US-A- 4 449 392      US-A- 5 866 802**

# Description

## Domaine de l'invention

La présente invention a pour objet un procédé et un système d'évaluation de l'étanchéité d'un dispositif de stockage de gaz carburant sous haute pression fourni à partir d'une station de remplissage par l'intermédiaire d'une ligne de remplissage raccordée au dispositif de stockage de gaz comprenant lui-même un système de canalisation et au moins un réservoir.

L'invention concerne ainsi en particulier le remplissage des réservoirs de gaz naturel carburant ainsi que la vérification d'étanchéité des systèmes haute pression embarqués, dont la pression peut être par exemple de l'ordre de 200 bar.

## Etat de l'art antérieur

On connaît déjà divers systèmes de vérification de l'étanchéité de réservoirs à carburants liquides non pressurisés (tels que par exemple le gazole ou le supercarburant).

Dans ce cas, l'opération est réalisée sur un véhicule en maintenance et impose au préalable la déconnexion de certains éléments et la mise en oeuvre d'un élément spécial de raccordement pour assurer la connexion étanche d'une source de gaz neutre sous pression à l'embout de remplissage. Après pressurisation du réservoir et de la tuyauterie amont, un contrôle de l'évolution de la pression dans le système permet de déceler une baisse de pression caractérisant une fuite. De tels systèmes de vérification d'étanchéité peuvent difficilement être utilisés de façon simple car ils exigent soit la vidange préalable du réservoir, soit la détermination du volume de l'espace résiduel du réservoir qui n'est pas rempli de liquide.

On a également déjà proposé d'effectuer un diagnostic d'étanchéité de véhicules fonctionnant au GNV (Gaz Naturel Véhicule). Ce diagnostic est toutefois réalisé lors de la production du véhicule et s'effectue par pressurisation du système de stockage de gaz, à l'aide d'un gaz neutre différent du carburant.

On connaît par ailleurs, par le document US-A-5 866 806, un appareil destiné à détecter une fuite de gaz dans une conduite de transport de gaz donnant lieu à une consommation intermittente.

## Résumé de l'invention

La présente invention vise à remédier aux inconvénients de l'art antérieur et à permettre d'évaluer l'étanchéité d'un dispositif de stockage de gaz carburant sous haute pression d'une façon simple et économique, qui ne nécessite pas l'utilisation d'un gaz d'essai différent du gaz carburant et autorise des contrôles d'étanchéité réguliers et systématiques tout au long de la durée de vie du dispositif de stockage de gaz carburant.

Ces buts sont atteints grâce à un procédé d'évaluation de l'étanchéité d'un dispositif de stockage de gaz carburant sous haute pression utilisé comme carburant pour des véhicules et fourni à partir d'une station de remplissage par l'intermédiaire d'une ligne de remplissage raccordée au dispositif de stockage de gaz comprenant lui-même un système de canalisation et au moins un réservoir,

caractérisé en ce qu'il comprend les étapes suivantes :

a) lors du remplissage du dispositif de stockage de gaz carburant à partir de la station de remplissage, on procède à une mise en pression de la ligne de remplissage, du système de canalisation et dudit réservoir à partir de la station de remplissage à une pression supérieure à au moins 5 bar avec un débit de remplissage $Q_i$ contrôlé, et on mesure l'évolution de la pression $P_i$,

b) on suspend l'opération de remplissage, sans effectuer de dépressurisation, à un premier instant prédéterminé $t_i$ après le début de la mise en pression, on continue de mesurer l'évolution de la pression $P_i$ jusqu'à un deuxième instant prédéterminé $t_j$, on compare la pression $P_i$ par rapport à un seuil prédéterminé $S_i$ et si entre les deuxième instants prédéterminés $t_i$, $t_j$ la pression reste au-dessus du seuil prédéterminé $S_i$, on reprend l'opération de remplissage et on renouvelle à des instants ultérieurs, y compris à la fin normale de l'opération de remplissage, des contrôles de l'évolution de la pression par rapport à des seuils prédéterminés pendant une durée prédéterminée après chaque suspension de l'opération de remplissage pour détecter à chaque fois un éventuel défaut d'étanchéité.

Selon une caractéristique avantageuse, avant même le raccordement du dispositif de stockage de carburant à la ligne de remplissage de la station de remplissage, on procède à la mise en pression de la ligne de remplissage jusqu'à une pression prédéterminée supérieure à au moins 5 bar, on suspend la mise en pression à un instant $t0_i$ lorsque la pression prédéterminée est atteinte, sans effectuer de dépressurisation, on mesure l'évolution de la pression jusqu'à un deuxième instant prédéterminé $t0_j$, on compare la valeur instantanée $P_i$ de la pression par rapport à un seuil prédéterminé $S0_i$ et si entre les premier et deuxième instants prédéterminés $t0_i$ et $t0_j$ la pression diminue et descend au-dessous du seuil prédéterminé $S0_i$, on délivre une information de non étanchéité de la station de remplissage ou de la ligne de remplissage tandis que si entre les premier et deuxième instants prédéterminés $t0_i$, $t0_j$ la pression reste au-dessus du seuil prédéterminé $S0_i$, on reprend l'opération de mise en pression de la ligne de remplissage jusqu'à une pression prédéterminée supérieure à la pression précédemment atteinte et on renouvelle l'opération de suspension de mise en pression et de contrôle de l'évolution de la pression par rapport à un seuil prédéterminé pendant une durée prédéterminée pour détecter à nouveau un éventuel défaut d'étanchéité, de nouvelles opérations de mise en pression et de suspension avec contrôle de l'évolution de la pression étant réalisées jusqu'à une pression de service maximum de la station de remplissage.

Lors de la première étape de remplissage du dispositif de stockage de gaz carburant à partir de la station de remplissage avec un débit de remplissage $Q_i$ contrôlé, on mesure l'évolution de la pression $P_i$ en fonction du temps et si une rupture de pente est détectée, on en déduit qu'il existe une fuite au niveau du système de canalisation.

Dans ce cas, la localisation de la fuite peut être effectuée de façon très simple.

Selon un autre aspect de l'invention, pour déterminer la taille de la fuite, en cas de détection de non étanchéité du dispositif de stockage de gaz carburant, on reprend l'opération de remplissage en procédant à des ajustements successifs du débit de remplissage contrôlé, on continue de contrôler l'évolution de la pression et si, après deux ajustements successifs croissants du débit de remplissage contrôlé, on détecte d'une part un palier horizontal de pression stabilisée et d'autre part un palier incliné de pression croissante, on classe la fuite dans la catégorie des fuites petites ou moyennes et on détermine le débit de fuite à partir du débit de remplissage contrôlé ayant conduit audit palier horizontal de pression stabilisée.

Lorsque, en cas de détection de non étanchéité du dispositif de stockage de gaz carburant, on reprend l'opération de remplissage en procédant à des ajustements successifs croissants du débit de remplissage contrôlé et on continue de contrôler l'évolution de la pression, si, quelle que soit la valeur du débit de remplissage, on constate que la pression ne se stabilise pas et augmente toujours, on classe la fuite dans la catégorie des micro-fuites.

Lorsque, en cas de détection de non étanchéité du dispositif de stockage de gaz carburant, on reprend l'opération de remplissage en procédant à des ajustements successifs croissants du débit de remplissage contrôlé et on continue de contrôler l'évolution de la pression, si, quelle que soit la valeur du débit de remplissage, on constate que la pression n'augmente pas, on classe la fuite dans la catégorie des très grosses fuites.

En cas de détection de non étanchéité du dispositif de stockage de gaz carburant, après identification de la catégorie donnant la taille de la fuite et vérification de la présence d'un clapet anti-retour entre le système de canalisation et le réservoir, on procède à une analyse de la vitesse de la chute de pression et à une comparaison par rapport à une valeur de seuil $S_v$ dépendant des volumes respectifs du système de canalisation et du réservoir, et on identifie soit une non étanchéité du système de canalisation si la vitesse de la chute de pression est supérieure à la valeur de seuil $S_v$, soit une non étanchéité du réservoir si la vitesse de la chute de pression est inférieure à la valeur de seuil $S_v$.

Le procédé selon l'invention est particulièrement utile s'il est appliqué au contrôle d'étanchéité de dispositifs de stockage de gaz naturel utilisé comme carburant pour des véhicules.

Il permet en effet d'effectuer systématiquement de façon simple à chaque opération de remplissage en gaz carburant dans une station de remplissage, un diagnostic général d'étanchéité tout en permettant en cas de fuite de caractériser la taille de la fuite ainsi que sa localisation soit au niveau du réservoir, soit dans le système de canalisations d'alimentation du réservoir.

L'invention a encore pour objet un système d'évaluation de l'étanchéité d'un dispositif de stockage de gaz carburant sous haute pression utilisé comme carburant pour des véhicules et fourni à partir d'une station de remplissage par l'intermédiaire d'une ligne de remplissage raccordée au dispositif de stockage de gaz comprenant lui-même un système de canalisation et au moins un réservoir, avec au moins un clapet anti-retour disposé entre le système de canalisation et le réservoir, caractérisé en ce qu'il comprend un dispositif de mesure de pression raccordable sur la ligne de remplissage ou le système de canalisation, un dispositif de traitement des valeurs mesurées par le dispositif de mesure de pression, et un dispositif de visualisation d'informations fournies par le dispositif de traitement, le dispositif de traitement des valeurs mesurées par le dispositif de mesure de pression comprenant des moyens de commande du remplissage et de la suspension du remplissage du dispositif de stockage de gaz carburant à partir de la station de remplissage, des moyens de commande du débit de remplissage, une horloge et des moyens de comparaison de la pression mesurée par rapport à des seuils prédéterminés $S_i$ lors de périodes de suspension du remplissage.

Selon une caractéristique avantageuse, qui permet de réaliser des auto-tests de contrôle de l'intégrité d'une station de remplissage et de la ligne de remplissage, le dispositif de traitement des valeurs mesurées par le dispositif de mesure de pression comprend en outre des moyens pour commander la mise sous pression de la ligne de remplissage reliée à la station de remplissage, en l'absence de raccordement du dispositif de stockage de gaz, jusqu'à une valeur de pression de consigne prédéterminée, pour commander la suspension de cette mise en pression, et pour commander de façon sélective, après une suspension de la mise en pression, soit l'affichage d'un défaut d'étanchéité de la station de remplissage, soit la remise sous pression de la ligne de remplissage jusqu'à une nouvelle valeur de pression de consigne prédéterminée supérieure à la valeur de pression de consigne prédéterminée précédente.

Selon une autre caractéristique avantageuse, le dispositif de traitement des valeurs mesurées par le dispositif de mesure de pression comprend en outre des moyens d'analyse de la vitesse de la chute de pression mesurée par le dispositif de mesure de pression et des moyens de comparaison de ladite vitesse de la chute de pression par rapport à une valeur de seuil $S_v$ dépendant des volumes respectifs du système de canalisation et du réservoir.

Brève description des dessins

D'autres caractéristiques et avantages de l'invention ressortiront de la description suivante de modes particuliers de réalisation, donnés à titre d'exemples, en référence aux dessins annexés, sur lesquels :

- la figure 1 est une vue schématique des principaux éléments d'un système de vérification d'étanchéité selon l'invention,
- la Figure 2 est un schéma montrant un exemple d'application du système de vérification d'étanchéité selon l'invention à un dispositif particulier de stockage de gaz sous haute pression,
- la Figure 3 est un organigramme montrant les principales étapes du procédé de vérification d'étanchéité selon l'invention,
- la Figure 4 est un diagramme montrant l'évolution de la pression en fonction du temps lors d'une étape particulière du procédé selon l'invention permettant de détecter si un dispositif de stockage de gaz est étanche ou non,
- la Figure 5 est un diagramme montrant l'évolution de la pression en fonction du temps lors de la mise en oeuvre du procédé selon l'invention, d'une part dans le cas d'un défaut d'étanchéité au niveau d'un dispositif de canalisations et d'autre part dans le cas d'un défaut d'étanchéité au niveau d'un réservoir, et
- la Figure 6 est un diagramme montrant l'évolution de la pression en fonction du temps dans un dispositif de canalisations et dans un réservoir, au cours d'une étape particulière du procédé selon l'invention dans laquelle on procède à des augmentations contrôlées du débit de remplissage.

Description détaillée de modes particuliers de réalisation

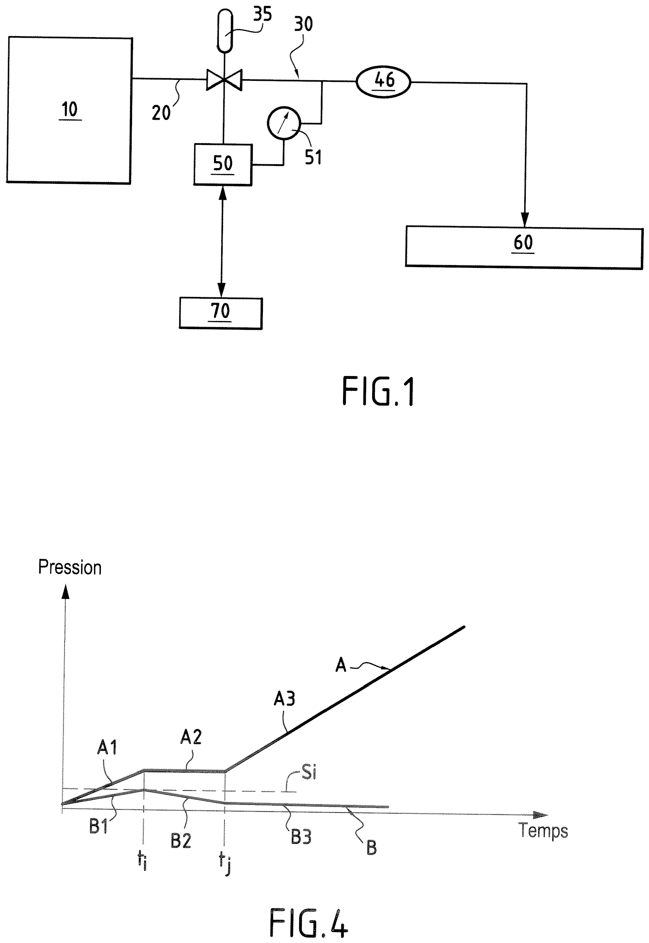

On a représenté sur la Figure 1 le schéma général de principe d'un système de diagnostic d'étanchéité conforme à l'invention, destiné à évaluer l'étanchéité de dispositifs (tuyauteries, réservoirs) de stockage sous haute pression d'un carburant gazeux, tel que le Gaz Naturel Comprimé (GNC) qui est utilisé dans des véhicules et est alors appelé GNV (Gaz Naturel Véhicule).

Le Gaz Naturel Comprimé est disponible dans des stations de remplissage 10 comprenant des bornes munies de lignes de remplissage flexibles 20 auxquelles des utilisateurs peuvent se connecter pour effectuer le remplissage d'un réservoir tel que 60.

Selon l'invention, un ou plusieurs réservoirs 60 tels que des réservoirs de véhicule, associés à un dispositif de canalisations 30 raccordable à une ligne de remplissage flexible 20 elle-même reliée à une station de remplissage 10, coopèrent avec un système de diagnostic d'étanchéité qui comprend essentiellement un manomètre 51, des circuits de traitement 50, tels qu'un micro-ordinateur, et une unité d'affichage 70 qui peut faire partie du micro-ordinateur ou constituer une unité indépendante des circuits de traitement. Un débitmètre 46 est avantageusement disposé sur une canalisation de raccordement au réservoir 60. Le système de canalisations 30 comprend entre autres une électrovanne à ouverture variable 35.

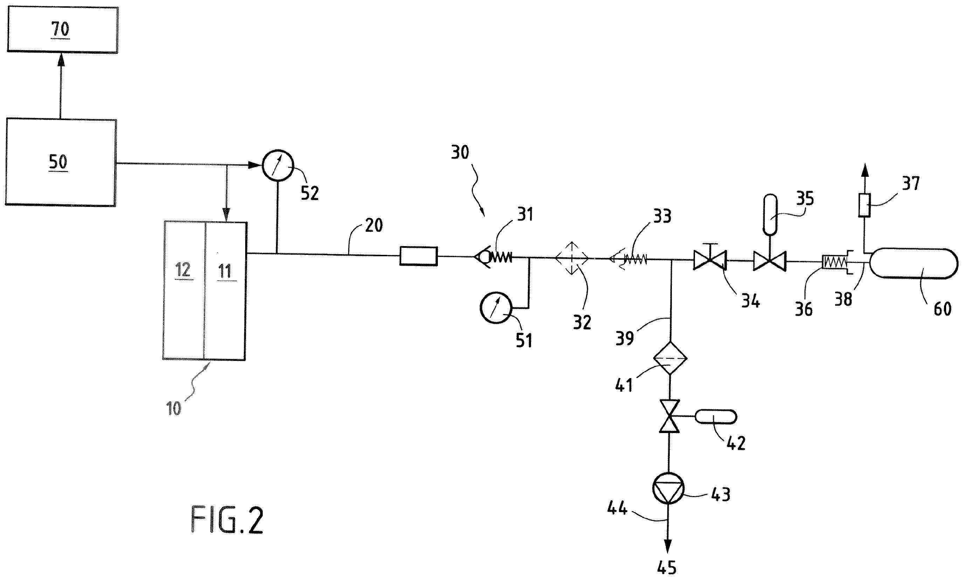

La Figure 2 montre l'application du système de diagnostic d'étanchéité à un dispositif particulier de stockage de gaz carburant haute pression, qui est placé à proximité d'une station de remplissage 10 comprenant au moins un réservoir de stockage 12 ou un compresseur, et une borne de distribution 11 à laquelle est reliée une conduite flexible 20 de distribution haute pression.

Un dispositif 50 de traitement de données et une unité d'affichage 70 sont disposés au niveau de la station de remplissage 10 et reçoivent des données de pression fournies par un dispositif de mesure de pression 52 qui mesure la pression dans la conduite 20 de distribution haute pression, ou un dispositif de mesure de pression 51 qui mesure la pression dans une canalisation 38 de raccordement d'un réservoir 60 à la conduite 20.

Le réservoir 60 comprend une conduite d'évent munie d'un fusible thermique 37 et, sur la canalisation d'alimentation 38, une polyvanne faisant office de clapet à l'arrêt. Cette polyvanne peut comprendre une vanne manuelle 34, une électrovanne 35 et un limiteur de débit 36.

En amont de la polyvanne, la canalisation comprend un clapet anti-retour optionnel 33, un filtre GNC en T optionnel 32 qui peut être muni de raccords doubles bagues et un about de remplissage 31 destiné à se raccorder sur la conduite 20 de distribution haute pression. En amont de la polyvanne, une canalisation 39 rigide ou flexible est associée à un filtre GNC en ligne 41, une électrovanne 42 et un détendeur 43 et se prolonge par une conduite flexible 44 d'alimentation des injecteurs 45 qui en service sont alimentés en GNC à partir du réservoir 60 lorsque le véhicule équipé de ce dispositif quitte la station de remplissage.

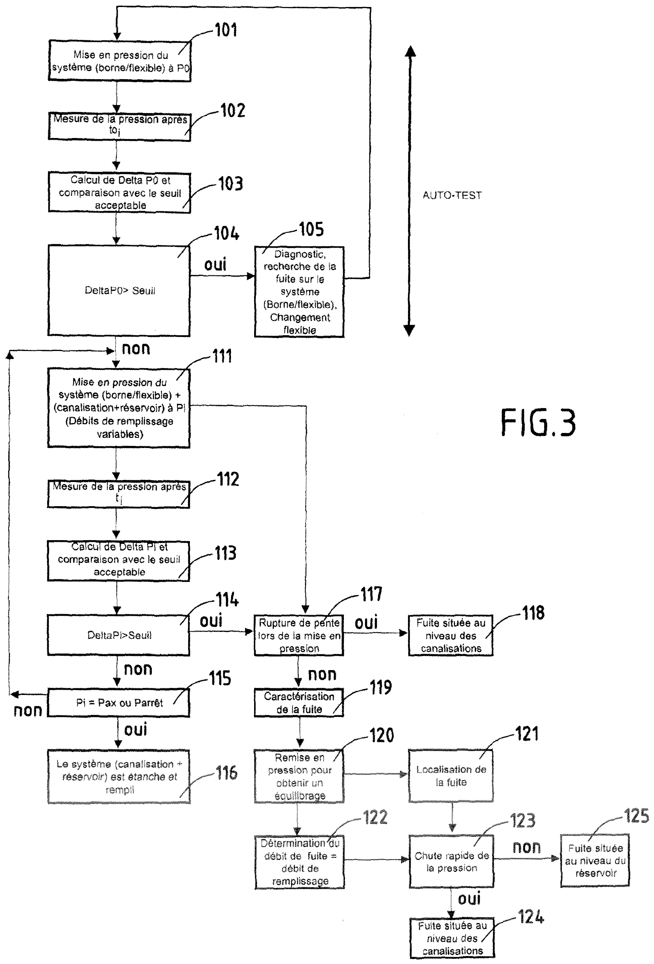

Les éléments fonctionnels du système de diagnostic d'étanchéité selon l'invention seront décrits plus loin en référence à l'organigramme de la Figure 3 illustrant les différentes étapes du procédé selon l'invention.

L'invention permet d'une part d'évaluer de façon générale l'étanchéité de la partie haute pression d'un véhicule, comprenant un ou plusieurs réservoirs et le dispositif de canalisations de connexion à la station de remplissage et d'autre part, en cas de détection de fuite, de classer la fuite dans une catégorie selon son dimensionnement et enfin de déterminer si la fuite se situe sur un réservoir ou au niveau du dispositif de canalisation.

Une éventuelle fuite est caractérisée par son débit, qui dépend de la pression et de la dimension de l'ouverture créant la fuite.

Les fuites peuvent ainsi être réparties essentiellement en quatre catégories en fonction du débit de fuite, exprimé en norme-mètres cubes par heure (Nm3/h), c'est-à-dire correspondant au débit volumétrique exprimé en mètres cubes par heure rapportés à des conditions normalisées de température (273 K) et de pression (101,3 kilopascals) :

- micro-fuite (débit inférieur à 0,02 Nm3/h) : fuite en général uniquement détectable au 1000 bulles, pouvant survenir en cas de raccord mal serré (mais à la clef tout de même). L'absence du joint de l'about de remplissage rentre aussi dans cette catégorie ;
- petite fuite (débit compris entre 0,2 Nm3/h et 3 Nm3/h) : débit susceptible d'être observé dans le cas d'une fuite en aval de la polyvanne, lorsque celle-ci est fermée et si l'étanchéité du joint est dégradée. Un copeau sur le joint de l'about engendre aussi une fuite de cette catégorie ;
- fuite moyenne (débit compris entre 3 Nm3/h et 10 Nm3/h) : ce type de fuite est susceptible de se produire lorsqu'un raccord a été uniquement serré à la main ;
- grosse fuite (débit supérieur à 10 Nm3/h) : ce genre de fuite pourrait survenir sur une canalisation dégradée (probablement à partir d'un orifice équivalent de 0,5 mm de diamètre).

Le procédé et le système de vérification d'étanchéité selon l'invention seront maintenant décrits en référence à la Figure 3 qui illustre les principales étapes du procédé.

Les étapes 101 à 105 correspondent à une procédure d'auto-test de la station de remplissage 10 et de la conduite flexible 20. Cette procédure d'auto-test est réalisée en dehors d'une opération de remplissage du dispositif de stockage de gaz carburant d'un véhicule, de sorte qu'aucun about de remplissage 31 n'est raccordé à la conduite flexible 20. Un manomètre 52 est utilisé pour mesurer la pression dans la conduite flexible 20 et est relié au dispositif 50 de traitement des mesures.

L'opération d'auto-test peut être déclenchée périodiquement, manuellement ou automatiquement et peut être réalisée à différentes pressions de service $P_0$ telles que par exemple 10 bar, 100 bar et 200 bar.

L'étape 101 de cette procédure d'auto-test consiste en la mise à la pression $P_0$ (supérieure à environ 5 bar) de l'ensemble constitué de la station de remplissage 10 et de la conduite flexible 20. Lorsque la pression $P_0$ est atteinte à un instant $t0_i$, on suspend la mise en pression, sans effectuer de dépressurisation et on mesure l'évolution de la pression jusqu'à un deuxième instant prédéterminé $t0_j$ (étape 102). On compare la valeur instantanée $P_i$ de la pression à l'instant $t0_i$ par rapport à un seuil prédéterminé $S0_i$ (étape 103). A l'étape 104, on procède à un test pour déterminer si entre les instants $t0_i$ et $t0_j$ la pression diminue et descend au-dessous du

seuil prédéterminé $S0_i$. Si c'est le cas, à l'étape 105, il y a un diagnostic de présence de fuite sur l'ensemble station de remplissage 10 et conduite flexible 20, et par exemple par précaution un changement de conduite flexible 20 peut avoir lieu avant une opération de remplissage d'un véhicule.

Après l'étape 105 de diagnostic et de réparation, il y a retour à l'étape 101.

Si le test de l'étape 104 révèle qu'il n'y a pas de défaut d'étanchéité de l'ensemble station de remplissage 10 et conduite flexible 20, on passe à l'étape 111 au cours de laquelle, après raccordement de l'about de remplissage 31 d'un dispositif de stockage de gaz 30, 60 à la conduite flexible 20, on procède à une mise en pression de la ligne de remplissage 20, du système de canalisations 30 et du réservoir 60 à partir de la station de remplissage 10 à une pression $P_i$ supérieure à au moins 5 bar, par exemple à une pression de 7 bar, avec un débit de remplissage $Q_i$ contrôlé, et on mesure l'évolution de la pression $P_i$ en fonction du temps.

Au cours d'une étape 117 on examine s'il existe une rupture de pente dans l'évolution de la pression $P_i$ en fonction du temps et, si c'est le cas, on en déduit qu'il existe une fuite au niveau du système de canalisation 30.

En effet, dans le cas où le remplissage est déclenché alors qu'il existe une fuite localisée au niveau du système de canalisations 30, et compte tenu de la présence d'une polyvanne comprenant une vanne manuelle 34, une électrovanne 35 et un limiteur de débit 36, laquelle polyvanne fait office de clapet anti-retour à l'arrêt et donc lors du remplissage, dès lors que le volume de gaz dans le système de canalisations 30 a eu le temps de se purger entre l'arrêt du véhicule et le début du remplissage, il existe au début du remplissage une différence de pression entre la canalisation 30 et le réservoir 60, cette différence de pression ayant été engendrée par la purge.

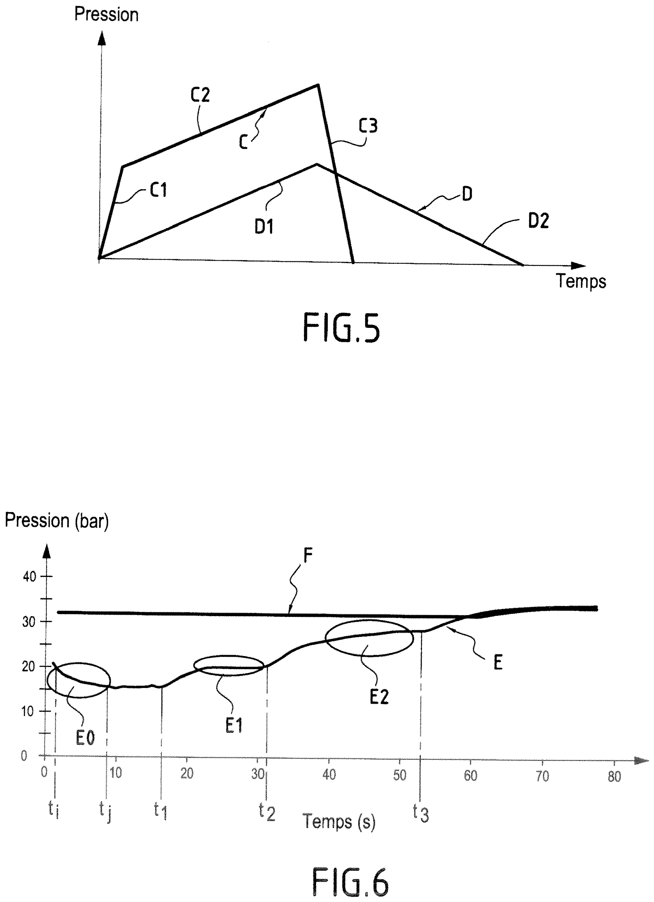

Dès lors que le remplissage est commencé avec un débit contrôlé à l'étape 111, s'il existe une rupture de pente entre les tronçons C1 et C2 de la courbe C donnant la pression en fonction du temps (Figure 5), on peut diagnostiquer qu'il existe une fuite située au niveau des canalisations (étape 118). En effet, dans un premier temps (tronçon C1), la canalisation de faible volume a sa pression qui augmente jusqu'à atteindre la pression du réservoir. La montée en pression est ensuite (tronçon C2) bien plus lente pour le même débit de remplissage.

En revanche, si une fuite existe au niveau du réservoir 60, qui présente un volume bien plus grand que celui du système de canalisations 30, il est possible que le laps de temps entre l'arrêt du véhicule et le début du remplissage n'ait pas permis une purge suffisante du système de canalisations pour qu'ensuite on puisse observer une rupture de pente (cas du tronçon D1 de la courbe D de la Figure 5).

Le procédé selon l'invention permet toutefois de détecter de façon sûre une fuite, qu'elle se situe au niveau du réservoir ou au niveau du système de canalisations.

Pour cela, à l'étape 112 qui suit l'étape 111, on suspend l'opération de remplissage, sans effectuer de dépressurisation, à un instant prédéterminé $t_i$ après le début de la mise en pression et on continue de mesurer l'évolution de la pression $P_i$, avec le manomètre 51, jusqu'à un instant $t_j$.

A l'étape 113, on compare la pression $P_i$ mesurée, par rapport à un seuil prédéterminé $S_i$.

A l'étape 114, si on a constaté que entre les instants $t_i$ et $t_j$ la pression a diminué et est descendue en dessous du seuil prédéterminé $S_i$ (cas du tronçon B2 de la courbe B de la Figure 4 donnant l'évolution de la pression en fonction du temps et comprenant des tronçons successifs B1, B2 et B3), on délivre une information de non étanchéité et on passe à l'étape 117 ou 119.

Si en revanche on constate à l'étape 114 que, entre les premier et deuxième instants prédéterminés $t_i$, $t_j$, la pression reste au-dessous du seuil prédéterminé $S_i$ (cas du tronçon A2 de la courbe A de la Figure 4 donnant l'évolution de la pression en fonction du temps et comprenant des tronçons successifs A1, A2, A3), on reprend l'opération de remplissage avec une pression $P_{ax}$ (étape 115) et on renouvelle à des instants ultérieurs, y compris à la fin normale de l'opération de remplissage à la pression $P_{arrêt}$, des contrôles de l'évolution de la pression par rapport à des seuils prédéterminés pendant une durée prédéterminée après chaque suspension de l'opération de remplissage pour détecter à chaque fois un éventuel défaut d'étanchéité (étapes 111 à 115).

Si à la fin de l'étape 115 ayant déjà conduit à la pression d'arrêt $P_{arrêt}$, aucun défaut d'étanchéité n'a été détecté, on affiche à l'étape 116 que le dispositif de stockage comprenant le système de canalisations 30 et le réservoir 60 est étanche et rempli.

Après une étape 114 ou 117 ayant conduit à la détection d'une fuite, on passe à une étape 119 permettant de déterminer la taille de la fuite.

Pour cela, à l'étape 120, il est opéré une remise en pression en ajustant le débit de manière à obtenir un équilibrage entre le débit de fuite et le débit de remplissage. En reprenant le remplissage avec un débit contrôlé, la pression augmente jusqu'à une pression seuil. Cette pression et le débit du remplissage équilibrent le débit de fuite caractérisant la fuite (étape 122) qui peut ainsi être classée en micro-fuite, petite fuite, fuite moyenne ou grosse fuite.

Ainsi, si quels que soient les débits régulés imposés par le système de diagnostic, la pression ne se stabilise pas et augmente, la fuite est classée dans la catégorie des micro-fuites. A l'autre extrême, si quels que soient les débits, la pression n'augmente pas, la fuite sera classée dans la catégorie des grosses fuites.

La Figure 6 montre des courbes E et F donnant l'évolution de la pression en fonction du temps respectivement pour la pression dans le système de canalisations 30 et pour la pression dans le réservoir 60, en présence de fuite et application de débits de remplissage contrôlés évolutifs.

Des augmentations du débit de remplissage sont effectuées aux instants successifs $t_1$, $t_2$ et $t_3$. On constate la présence de paliers tels que $E_1$ et $E_2$ après chaque augmentation du débit de remplissage. Les modifications de la forme des courbes en cas de fuite permettent de caractériser la taille des fuites comme indiqué plus haut.

De façon plus particulière, on va toutefois expliciter en référence à la Figure 6 la démarche qui peut être adoptée pour déterminer la taille d'une fuite qui a été détectée lors du remplissage d'une canalisation 30 et du réservoir correspondant 60.

Comme cela a été exposé plus haut, au début du remplissage, on procède à une mise en pression du système avec un débit contrôlé $Q_i$ faible (étape 111 de la Figure 4). Si le système est non étanche lorsque l'on mesure la pression à des instants $t_i$ et $t_j$ successifs, on observe entre ces instants successifs $t_i$ et $t_j$ une diminution de la pression mesurée par le manomètre 51 ou 52 (zone $E_0$ de la courbe E de la Figure 6), car le débit de remplissage, qui est à un niveau initial faible, est inférieur au débit de fuite.

Pour déterminer le débit de fuite, avec une valeur de pression dans le réservoir 60 donnée qui est illustrée par la courbe F de la Figure 6, après l'étape initiale de remplissage avec un débit initial contrôlé $Q_i$, on continue d'ouvrir progressivement, par paliers aux instants $t_1$, $t_2$, $t_3$,..., une vanne de déversement (par exemple l'électrovanne 35) permettant le remplissage de la canalisation 30 et du réservoir 60. Chaque position de la vanne de déversement est calibrée ou contrôlée par un débitmètre 46 (Figure 1). A chaque augmentation du débit de remplissage, on mesure l'évolution de la pression dans la canalisation 30 jusqu'à observer un palier horizontal de pression stabilisée tel qu'illustré dans la zone $E_1$ de la courbe E de la Figure 6, entre des instants $t_1$ et $t_2$ correspondant à des augmentations successives du débit contrôlé. A aucun moment dans ce processus le débit de remplissage n'est nul.

Le palier horizontal de pression stabilisée de la zone $E_1$ correspond au fait que le débit de remplissage équilibre exactement le débit de fuite. Si le débit de remplissage est augmenté à nouveau à l'instant $t_2$, on observe ensuite dans la zone $E_2$ de la courbe E de la Figure 6 un palier légèrement ascendant qui traduit une légère augmentation de pression du fait que le débit de remplissage est devenu supérieur au débit de fuite.

A l'issue de ce processus (illustré sur les étapes 119, 120, 122 de la Figure 3), la fuite, qui est classée comme appartenant à la catégorie des fuites petites ou moyennes, peut ainsi être pleinement caractérisée par la valeur du débit de remplissage conduisant à un palier horizontal de pression (zone $E_1$) et par la valeur de la pression, pour ce palier horizontal.

Dans le cas extrême où l'on n'a pas pu observer après deux ajustements successifs croissants du débit de remplissage contrôlé un palier horizontal de pression stabilisé suivi d'un palier incliné de pression croissante, on peut quand même classer la fuite de la façon suivante dans les catégories extrêmes :

Si, quelles que soient les valeurs du débit de remplissage imposées par le système de diagnostic aux instants successifs tels que $t_1$ et $t_2$, on n'observe pas de stabilisation de la pression avec un palier horizontal comme dans la zone $E_1$, mais seulement des paliers ascendants comme dans la zone $E_2$, la fuite sera classée dans la catégorie des micro-fuites.

Si au contraire, quelles que soient les valeurs du débit de remplissage imposées par le système de diagnostic aux instants successifs tels que $t_1$ et $t_2$, on n'obtient pas de palier ascendant comme dans la zone $E_2$, la fuite sera classée dans la catégorie des très grosses fuites.

Les étapes 121 à 125 permettent de localiser une fuite soit au niveau des canalisations soit au niveau du réservoir.

La distinction entre une fuite sur une canalisation 30 et une fuite dans un réservoir 60 est possible grâce à la différence importante de leurs volumes respectifs (le rapport entre ces volumes étant généralement supérieur à 50) et à l'isolation des deux systèmes par une polyvanne faisant office de clapet anti-retour à l'arrêt du véhicule et donc lors de l'opération de remplissage.

Dès lors que la taille de la fuite a été déterminée à l'étape 122, à l'étape 123 on vérifie la vitesse de la chute de pression. Si à l'étape 123 on constate une chute rapide de pression (tronçon C3 de la courbe C de la Figure 5), on en déduit que la fuite est située au niveau des canalisations ou de la connexion avec le système de remplissage (étape 124). Au contraire, si à l'étape 123 on constate une chute lente de pression (tronçon D2 de la courbe D de la Figure 5), on en déduit que la fuite est située au niveau du réservoir (étape 125).

De manière générale, la valeur mesurée dP/dt de la variation de pression en fonction du temps, à une température T fixe, est proportionnelle au débit instantané de fuite $Q_i$ qui est fonction de la pression et de la taille de la fuite et au volume fuyant V, comme cela peut être exprimé par la relation suivante :

$$\frac{dp}{dt} = \frac{RT}{V} Q_i$$

où R est la constante des gaz parfaits.

Le procédé selon l'invention avec les diverses étapes décrites précédemment peut être mis en oeuvre dans toute la plage des valeurs de pression qui du début du remplissage à la fin du remplissage peuvent par exemple s'étaler entre 7 et 200 bar.

## Revendications

1. Procédé d'évaluation de l'étanchéité d'un dispositif de stockage de gaz carburant sous haute pression utilisé comme carburant pour des véhicules et fourni à partir d'une station de remplissage (10) par l'intermédiaire d'une ligne de remplissage (20) raccordée au dispositif de stockage de gaz comprenant lui-même un système de canalisation (30) et au moins un réservoir (60),
   **caractérisé en ce qu'**il comprend les étapes suivantes :

   a) lors du remplissage du dispositif de stockage de gaz carburant à partir de la station de remplissage (10), on procède à une mise en pression de la ligne de remplissage (20), du système de canalisation (30) et dudit réservoir (60) à partir de la station de remplissage (10) à une pression supérieure à au moins 5 bar avec un débit de remplissage $Q_i$ contrôlé, et on mesure l'évolution de la pression $P_i$,
   b) on suspend l'opération de remplissage, sans effectuer de dépressurisation, à un premier instant prédéterminé $t_i$ après le début de la mise en pression, on continue de mesurer l'évolution de la pression $P_i$ jusqu'à un deuxième instant prédéterminé $t_j$, on compare la pression $P_i$ par rapport à un seuil prédéterminé $S_i$ et si entre les premier et deuxième instants prédéterminés $t_i$, $t_j$ la pression diminue et descend en dessous du seuil prédéterminé $S_i$, on délivre une information de non étanchéité, tandis que si entre les premier et deuxième instants prédéterminés $t_i$, $t_j$ la pression reste au-dessus du seuil prédéterminé $S_i$, on reprend l'opération de remplissage et on renouvelle à des instants ultérieurs, y compris à la fin normale de l'opération de remplissage, des contrôles de l'évolution de la pression par rapport à des seuils prédéterminés pendant une durée prédéterminée après chaque suspension de l'opération de remplissage pour détecter à chaque fois un éventuel défaut d'étanchéité.

2. Procédé selon la revendication 1, **caractérisé en ce que**, avant même le raccordement du dispositif de stockage de carburant à la ligne de remplissage (20) de la station de remplissage (10), on procède à la mise en pression de la ligne de remplissage (20) jusqu'à une pression prédéterminée supérieure à au moins 5 bar, on suspend la mise en pression à un instant $t0_i$ lorsque la pression prédéterminée est atteinte, sans effectuer de dépressurisation, on mesure l'évolution de la pression jusqu'à un deuxième instant prédéterminé $t0_j$, on compare la valeur instantanée $P_i$ de la pression par rapport à un seuil prédéterminé $S0_i$ et si entre les premier et deuxième instants prédéterminés $t0_i$ et $t0_j$ la pression diminue et descend au-dessous du seuil prédéterminé $S0_i$, on délivre une information de non étanchéité de la station de remplissage (10) ou de la ligne de remplissage (20) tandis que si entre les premier et deuxième instants prédéterminés $t0_i$, $t0_j$ la pression reste au-dessus du seuil prédéterminé $S0_i$, on reprend l'opération de mise en pression de la ligne de remplissage (20) jusqu'à une pression prédéterminée supérieure à la pression précédemment atteinte et on renouvelle l'opération de suspension de mise en pression et de contrôle de l'évolution de la pression par rapport à un seuil prédéterminé pendant une durée prédéterminée pour détecter à nouveau un éventuel défaut d'étanchéité, de nouvelles opérations de mise en pression et de suspension avec contrôle de l'évolution de la pression étant réalisées jusqu'à une pression de service maximum de la station de remplissage (10).

3. Procédé selon la revendication 1 ou la revendication 2, **caractérisé en ce que** lors de la première étape de remplissage du dispositif de stockage de gaz carburant à partir de la station de remplissage (10) avec un débit de remplissage $Q_i$ contrôlé, on mesure l'évolution de la pression $P_i$ en fonction du temps et si une telle rupture de pente est détectée, on en déduit qu'il existe une fuite au niveau du système de canalisation (30).

4. Procédé selon l'une quelconque des revendications 1 à 3, **caractérisé en ce que**, en cas de détection de non étanchéité du dispositif de stockage de gaz carburant, on reprend l'opération de remplissage en procédant à des ajustements successifs croissants du débit de remplissage contrôlé, on continue de contrôler l'évolution de la pression et si, après deux ajustements successifs croissants du débit de remplissage contrôlé, on détecte d'une part un palier horizontal de pression stabilisé et d'autre part un palier incliné de pression croissante, on classe la fuite dans la catégorie des fuites petites ou moyennes et on détermine le débit de fuite à partir du débit de remplissage contrôlé ayant conduit audit palier horizontal de pression stabilisée.

5. Procédé selon l'une quelconque des revendications 1 à 3, **caractérisé en ce que**, en cas de détection de non étanchéité du dispositif de stockage de gaz carburant, on reprend l'opération de remplissage en procédant à des ajustements successifs croissants du débit de remplissage contrôlé, on continue de contrôler l'évolution de la pression et si, quelle que soit la valeur du débit de remplissage, on constate que la pression ne se stabilise pas et augmente toujours, on classe la fuite dans la catégorie des micro-fuites.

6. Procédé selon l'une quelconque des revendications 1 à 3, **caractérisé en ce que**, en cas de détection de non étanchéité du dispositif de stockage de gaz carburant, on reprend l'opération de remplissage en procédant à des ajustements successifs croissants du débit de remplissage contrôlé, on continue de contrôler l'évolution de la pression et si, quelle que soit la valeur du débit de remplissage, on constate que la pression n'augmente pas, on classe la fuite dans la catégorie des très grosses fuites.

7. Procédé selon l'une quelconque des revendications 4 à 6, **caractérisé en ce qu'**en cas de détection de non étanchéité du dispositif de stockage de gaz carburant, après identification de la catégorie donnant la taille de la fuite et vérification de la présence d'un clapet anti-retour entre le système de canalisation (30) et le réservoir (60), on procède à une analyse de la vitesse de la chute de pression et à une comparaison par rapport à une valeur de seuil $S_v$ dépendant des volumes respectifs du système de canalisation (30) et du réservoir (60), et on identifie soit une non étanchéité du système de canalisation (30) si la vitesse de la chute de pression est supérieure à la valeur de seuil $S_v$, soit une non étanchéité du réservoir (60) si la vitesse de la chute de pression est inférieure à la valeur de seuil $S_v$.

8. Procédé selon l'une quelconque des revendications 1 à 7, **caractérisé en ce qu'**il est appliqué au contrôle d'étanchéité de dispositifs de stockage de gaz naturel utilisé comme carburant pour des véhicules.

9. Système d'évaluation de l'étanchéité d'un dispositif de stockage de gaz carburant sous haute pression utilisé comme carburant pour des véhicules et fourni à partir d'une station de remplissage (10) par l'intermédiaire d'une ligne de remplissage (20) raccordée au dispositif de stockage de gaz comprenant lui-même un système de canalisation (30) et au moins un réservoir (60), avec au moins un clapet anti-retour (34-36, 33) disposé entre le système de canalisation (30) et le réservoir (60), **caractérisé en ce qu'**il comprend un dispositif (51) de mesure de pression raccordable sur la ligne de remplissage (20) ou le système de canalisation (30), un dispositif (50) de traitement des valeurs mesurées par le dispositif (51) de mesure de pression, et un dispositif (70) de visualisation d'informations fournies par le dispositif de traitement (50), le dispositif (50) de traitement des valeurs mesurées par le dispositif (51) de mesure de pression comprenant des moyens de commande du remplissage et de la suspension du remplissage du dispositif de stockage de gaz carburant à partir de la station de remplissage (20), des moyens de commande du débit de remplissage, une horloge et des moyens de comparaison de la pression mesurée par rapport à des seuils prédéterminés $S_i$ lors de périodes de suspension du remplissage.

10. Système selon la revendication 9, **caractérisé en ce que** le dispositif (50) de traitement des valeurs mesurées par le dispositif (52) de mesure de pression comprend en outre des moyens pour commander la mise sous pression de la ligne de remplissage (20) reliée à la station de remplissage (10), en l'absence de raccordement du dispositif de stockage de gaz, jusqu'à une valeur de pression de consigne prédéterminée, pour commander la suspension de cette mise en pression, et pour commander de façon sélective, après une suspension de la mise en pression, soit l'affichage d'un défaut d'étanchéité de la station de remplissage (10), soit la remise sous pression de la ligne de remplissage (20) jusqu'à une nouvelle valeur de pression de consigne prédéterminée supérieure à la valeur de pression de consigne prédéterminée précédente.

11. Système selon la revendication 9 ou la revendication 10, **caractérisé en ce que** le dispositif (50) de traitement des valeurs mesurées par le dispositif (51) de mesure de pression comprend en outre des moyens d'analyse de la vitesse de la chute de pression mesurée par le dispositif (51) de mesure de pression et des moyens de comparaison de ladite vitesse de la chute de pression par rapport à une valeur de seuil $S_v$ dépendant des volumes respectifs du système de canalisation (30) et du réservoir (60).

12. Système selon l'une quelconque des revendications 9 à 11, **caractérisé en ce qu'**il est appliqué au contrôle d'étanchéité de dispositifs de stockage de gaz naturel utilisé comme carburant pour des véhicules.


**Patentansprüche**

1. Verfahren zur Bewertung der Dichtigkeit einer Vorrichtung zur Lagerung von Hochdrucktreibgas, das als Kraftstoff für Fahrzeuge verwendet wird und von einer Füllstation (10) mittels einer Füllleitung (20), welche an die Gaslagerungsvorrichtung angeschlossen ist, die selbst ein Rohrleitungssystem (30) und wenigstens einen Tank (60) umfasst, bereitgestellt wird,
**dadurch gekennzeichnet, dass** es die folgenden Schritte umfasst:

    a) während des Füllens der Treibgaslagerungsvorrichtung aus der Füllstation (10) wird eine Druckbeaufschlagung der Füllleitung (20), des Rohrleitungssystems (30) und des Tanks (60) von der Füllstation (10) aus auf einen Druck von mehr als wenigstens 5 Bar mit einem kontrollierten Fülldurchsatz $Q_i$ vollzogen und wird die Entwicklung des Drucks $P_i$ gemessen,

    b) der Füllvorgang wird zu einem ersten vorbestimmten Zeitpunkt $t_i$ nach dem Beginn der Druckbeaufschlagung unterbrochen, ohne eine Druckminderung vorzunehmen, die Messung der Entwicklung des Drucks $P_i$ wird bis zu einem zweiten vorbestimmten Zeitpunkt $t_j$ fortgesetzt, der Druck $P_i$ wird mit einem vorbestimmten Schwellwert $S_i$ verglichen, und es wird, wenn zwischen dem ersten und dem zweiten vorbestimmten Zeitpunkt $t_i$, $t_j$ der Druck abnimmt und unter den vorbestimmten Schwellwert $S_i$ sinkt, eine Undichtigkeitsinformation bereitgestellt, während, wenn zwischen dem ersten und dem zweiten vorbestimmten Zeitpunkt $t_i$, $t_j$ der Druck oberhalb des vorbestimmten Schwellwertes $S_i$ bleibt, der Füllvorgang fortgesetzt wird und zu späteren Zeitpunkten, einschließlich des normalen Endes des Füllvorgangs, wiederholt Kontrollen der Entwicklung des Drucks gegenüber vorbestimmten Schwellwerten über eine vorbestimmte Dauer nach jeder Unterbrechung des Füllvorgangs vorgenommen werden, um bei jedem Mal einen eventuellen Dichtigkeitsfehler festzustellen.

2. Verfahren nach Anspruch 1, **dadurch gekennzeichnet, dass** noch vor dem Anschließen der Kraftstofflagerungsvorrichtung an die Füllleitung (20) der Füllstation (10) die Druckbeaufschlagung der Füllleitung (20) bis zu einem vorbestimmten Druck größer als wenigstens 5 Bar vollzogen wird, die Druckbeaufschlagung zu einem Zeitpunkt $t0_i$ unterbrochen wird, wenn der vorbestimmte Druck erreicht ist, ohne eine Druckminderung vorzunehmen, die Entwicklung des Drucks bis zu einem zweiten vorbestimmten Zeitpunkt $t0_j$ gemessen wird, der momentane Wert $P_i$ des Drucks mit einem vorbestimmten Schwellwert $S0_i$ verglichen wird und, wenn zwischen dem ersten und dem zweiten vorbestimmten Zeitpunkt $t0_i$ und $t0_j$ der Druck abnimmt und unter den vorbestimmten Schwellwert $S0_i$ sinkt, eine Undichtigkeitsinformation der Füllstation (10) oder der Füllleitung (20) bereitgestellt wird, während, wenn zwischen dem ersten und dem zweiten vorbestimmten Zeitpunkt $t0_i$, $t0_j$ der Druck oberhalb des vorbestimmten Schwellwertes $S0_i$ bleibt, der Vorgang der Druckbeaufschlagung der Füllleitung (20) bis zu einem vorbestimmten Druck, der höher als der zuvor erreichte Druck ist, fortgesetzt wird, und der Vorgang des Unterbrechens der Druckbeaufschlagung und der Kontrolle der Entwicklung des Drucks gegenüber einem vorbestimmten Schwellwert über eine vorbestimmte Dauer wiederholt wird, um erneut einen eventuellen Dichtigkeitsfehler festzustellen, wobei erneute Vorgänge einer Druckbeaufschlagung und Unterbrechung mit Kontrolle der Entwicklung des Drucks bis zu einem maximalen Betriebsdruck der Füllstation (10) durchgeführt werden.

3. Verfahren nach Anspruch 1 oder Anspruch 2, **dadurch gekennzeichnet, dass** während des ersten Schrittes zum Füllen der Treibgaslagerungsvorrichtung aus der Füllstation (10) mit einem kontrollierten Fülldurchsatz $Q_i$, die Entwicklung des Drucks $P_i$ in Abhängigkeit von der Zeit gemessen wird und, wenn ein solcher Knick erfasst wird, hieraus abgeleitet wird, dass im Bereich des Rohrleitungssystems (30) ein Leck vorhanden ist.

4. Verfahren nach einem der Ansprüche 1 bis 3, **dadurch gekennzeichnet, dass** im Fall der Erfassung einer Undichtigkeit der Treibgaslagerungsvorrichtung der Füllvorgang unter Vornehmen von aufeinanderfolgenden zunehmenden Anpassungen des kontrollierten Fülldurchsatzes fortgesetzt wird, die Entwicklung des Drucks weiterhin kontrolliert wird und, wenn nach zwei aufeinanderfolgenden zunehmenden Anpassungen des kontrollierten Fülldurchsatzes, einerseits eine horizontale Stufe stabilisierten Drucks und andererseits eine geneigte Stufe steigenden Drucks erfasst wird, das Leck in die Kategorie der kleinen oder mittleren Leckagen eingestuft wird und die Leckmenge anhand des kontrollierten Fülldurchsatzes, welcher zu der horizontalen Stufe stabilisierten Drucks geführt hat, bestimmt wird.

5. Verfahren nach einem der Ansprüche 1 bis 3, **dadurch gekennzeichnet, dass** im Fall der Erfassung einer Undichtigkeit der Treibgaslagerungsvorrichtung der Füllvorgang unter Vornehmen von aufeinanderfolgenden zunehmenden Anpassungen des kontrollierten Fülldurchsatzes fortgesetzt wird, die Entwicklung des Drucks weiterhin kontrolliert wird und, wenn unabhängig von dem Wert des Fülldurchsatzes festgestellt wird, dass der Druck sich nicht stabilisiert und weiter steigt, das Leck in die Kategorie der Mikroleckagen eingestuft wird.

6. Verfahren nach einem der Ansprüche 1 bis 3, **dadurch gekennzeichnet, dass** im Fall der Erfassung einer Undichtigkeit der Treibgaslagerungsvorrichtung der Füllvorgang unter Vornehmen von aufeinanderfolgenden zunehmenden Anpassungen des kontrollierten Fülldurchsatzes fortgesetzt wird, die Entwicklung des Drucks weiterhin kontrolliert wird und, wenn unabhängig von dem Wert des Fülldurchsatzes festgestellt wird, dass der Druck nicht steigt, das Leck in die Kategorie der sehr starken Leckagen eingestuft wird.

7. Verfahren nach einem der Ansprüche 4 bis 6, **dadurch gekennzeichnet, dass** im Fall der Erfassung einer Undichtigkeit der Treibgaslagerungsvorrichtung nach Feststellen der Kategorie, welche die Größe des Lecks angibt, und Überprüfen des Vorliegens eines Rückschlagventils zwischen dem Rohrleitungssystem (30) und dem Tank (60), eine Analyse der Geschwindigkeit des Druckabfalls und ein Vergleich mit einem Schwellwert $S_v$, welcher von den jeweiligen Volumina des Rohrleitungssystems (30) und des Tanks (60) abhängt, vorgenommen werden und entweder eine Undichtigkeit des Rohrleitungssystems (30) festgestellt wird, wenn die Geschwindigkeit des Druckabfalls höher als der Schwellwert $S_v$ ist, oder eine Undichtigkeit des Tanks (60), wenn die Geschwindigkeit des Druckabfalls niedriger als der Schwellwert $S_v$ ist.

8. Verfahren nach einem der Ansprüche 1 bis 7, **dadurch gekennzeichnet, dass** es auf die Kontrolle der Dichtigkeit von Vorrichtungen zur Lagerung von Erdgas, das als Kraftstoff für Fahrzeuge verwendet wird, angewendet wird.

9. System zur Bewertung der Dichtigkeit einer Vorrichtung zur Lagerung von Hochdrucktreibgas, das als Kraftstoff für Fahrzeuge verwendet wird und von einer Füllstation (10) mittels einer Füllleitung (20), welche an die Gaslagerungsvorrichtung angeschlossen ist, die selbst ein Rohrleitungssystem (30) und wenigstens einen Tank (60), mit wenigstens einem Rückschlagventil (34-36, 33), das zwischen dem Rohrleitungssystem (30) und dem Tank (60) angeordnet ist, umfasst, bereitgestellt wird,
**dadurch gekennzeichnet, dass** es eine Vorrichtung (51) zur Druckmessung, welche an die Füllleitung (20) oder das Rohrleitungssystem (30) anschließbar ist, eine Vorrichtung (50) zur Verarbeitung der durch die Druckmessvorrichtung (51) gemessenen Werte und eine Vorrichtung (70) zum Anzeigen von durch die Verarbeitungsvorrichtung (50) bereitgestellten Informationen umfasst, wobei die Vorrichtung (50) zur Verarbeitung der durch die Druckmessvorrichtung (51) gemessenen Werte Mittel zur Steuerung des Füllens und der Unterbrechung des Füllens der Treibgaslagerungsvorrichtung aus der Füllstation (10), Mittel zur Steuerung des Fülldurchsatzes, einen Taktgeber und Mittel zum Vergleichen des gemessenen Drucks mit vorbestimmten Schwellwerten $S_i$ während Zeiten einer Unterbrechung des Füllens umfasst.

10. System nach Anspruch 9, **dadurch gekennzeichnet, dass** die Vorrichtung (50) zur Verarbeitung der durch die Druckmessvorrichtung (51) gemessenen Werte ferner Mittel umfasst, um die Druckbeaufschlagung der mit der Füllstation (10) verbundenen Füllleitung (20), bei Nichtanschluss der Gaslagerungsvorrichtung, bis zu einem vorbestimmten Solldruckwert zu steuern, um die Unterbrechung dieser Druckbeaufschlagung zu steuern und um selektiv, nach einer Unterbrechung der Druckbeaufschlagung, entweder die Anzeige eines Dichtigkeitsfehlers der Füllstation (10) oder das erneute Druckbeaufschlagen der Füllleitung (20) bis zu einem neuen vorbestimmten Solldruckwert, welcher größer als der vorhergehende vorbestimmte Solldruckwert ist, zu steuern.

**11.** System nach Anspruch 9 oder Anspruch 10, **dadurch gekennzeichnet, dass** die Vorrichtung (50) zur Verarbeitung der durch die Druckmessvorrichtung (51) gemessenen Werte ferner Mittel zur Analyse der Geschwindigkeit des Druckabfalls, welcher durch die Druckmessvorrichtung (51) gemessen wird, und Mittel zum Vergleichen der Geschwindigkeit des Druckabfalls mit einem Schwellwert $S_v$, welcher von den jeweiligen Volumina des Rohrleitungssystems (30) und des Tanks (60) abhängt, umfasst.

**12.** System nach einem der Ansprüche 9 bis 11, **dadurch gekennzeichnet, dass** es auf die Kontrolle der Dichtigkeit von Vorrichtungen zur Lagerung von Erdgas, das als Kraftstoff für Fahrzeuge verwendet wird, angewendet wird.

**Claims**

**1.** A method of evaluating the leaktightness of a device for storing fuel gas under high pressure for use as fuel by vehicles and delivered from a filling station (10) via a filler hose (20) that is connected to the gas storage device, itself comprising pipework (30) and at least one tank (60),
the method being **characterized in that** it comprises the following steps:

a) while filling the fuel gas storage device from the filling station (10), pressurizing the filler hose (20), the pipework (30), and said tank (60) from the filling station (10) at a pressure that is greater than at least 5 bar, filling at a controlled filling flow rate $Q_i$, and measuring variation in pressure $P_i$; and
b) at a first predetermined instant $t_i$ after the start of pressurizing, suspending the filling operation without depressurizing, continuing to measure variation in pressure $P_i$ to a second predetermined instant $t_j$, comparing the pressure $P_i$ relative to a predetermined threshold $S_i$, and if between the first and second predetermined instants $t_i$, $t_j$ the pressure decreases and drops below the predetermined threshold $S_i$, informing that a leak is present, whereas if between the first and second predetermined instants $t_i$, $t_j$ the pressure remains above the predetermined threshold $S_i$, restarting the filling operation and, at subsequent instants, including at the normal end of the filling operation, repeating verifications of variation in pressure relative to predetermined thresholds during a predetermined duration after each suspension of the filling operation so as to detect, on each occasion, the presence of a leak, if any.

**2.** A method according to claim 1, **characterized in that**, prior to connecting the fuel storage device to the filler hose (20) of the filling station (10), the method comprises pressurizing the filler hose (20) up to a predetermined pressure greater than at least 5 bar, suspending pressurization at an instant $t0_i$ when the predetermined pressure is reached, but without depressurizing, measuring variation in pressure until a second predetermined instant $t0_j$, comparing the instantaneous value $P_i$ of the pressure relative to a predetermined threshold $S0_i$, and if between the first and second predetermined instants $t0_i$ and $t0_j$, the pressure decreases and drops below the predetermined threshold $S0_i$, informing that the filling station (10) or the filler hose (20) presents a leak, whereas if between the first and second predetermined instants $t0_i$, $t0_j$ the pressure remains above the predetermined threshold $S0_i$, repeating the operation of pressurizing the filler hose (20) up to a predetermined pressure greater than the previously-reached pressure, and repeating the operation of suspending pressurization and monitoring pressure variation relative to a predetermined threshold during a predetermined duration in order again to detect the presence of a leak, if any, with new operations of pressurization and suspension while monitoring pressure variation being performed until reaching a maximum operating pressure of the filling station (10).

**3.** A method according to claim 1 or claim 2, **characterized in that** during the first step of filling the fuel gas storage device from the filling station (10) at a controlled filling rate $Q_i$, variation in the pressure $P_i$ is measured as a function of time, and if a slope discontinuity is detected, it is deduced that a leak exists from the pipework (30).

**4.** A method according to any one of claims 1 to 3, **characterized in that**, in the event of a leak from the fuel gas storage device being detected, the filling operation is repeated with the controlled filling flow rate being adjusted by successive increments, while continuing to monitor variation in pressure, and if, after two successive increases in the controlled filling flow rate there is detected firstly a horizontal pause at stabilized pressure and secondly a sloping pause of increasing pressure, then the leak is categorized as being a small or medium leak, and the leakage rate is determined from the controlled filling rate that led to said horizontal pause at stabilized pressure.

**5.** A method according to any one of claims 1 to 3, **characterized in that**, in the event of a leak from the fuel gas storage device being detected, the filling operation is repeated with the controlled filling flow rate being adjusted by successive increments, while continuing to monitor variation in pressure, and if, regardless of the value of the filling rate, it is observed that the pressure does not stabilize and always increases, the leak is classified in the microleak category.

6. A method according to any one of claims 1 to 3, **characterized in that**, in the event of a leak from the fuel gas storage device being detected, the filling operation is repeated with the controlled filling flow rate being adjusted by successive increments, while continuing to monitor variation in pressure, and if, regardless of the value of the filling rate, it is found that the pressure does not increase, the leak is classified in the category of very large leaks.

7. A method according to any one of claims 4 to 6, **characterized in that** in the event of a leak being detected from the fuel gas storage device, after identifying the category specifying the size of the leak, and verifying the presence of a check valve between the pipework (30) and the tank (60), the speed at which pressure drops is analyzed and compared relative to a threshold value $S_v$ depending on the respective volumes of the pipework (30) and of the tank (60), and the leak is identified as being either from the pipework (30) if the pressure drop speed is greater than the threshold value $S_v$, or as being from the tank (60) if the pressure drop speed is less than the threshold value $S_v$.

8. A method according to any one of claims 1 to 7, **characterized in that** it is applied to leak testing storage devices for natural gas used as fuel for vehicles.

9. A system for evaluating the leaktightness of a device for storing high pressure fuel gas used as fuel for vehicles and supplied from a filling station (10) via a filler hose (20) connected to the gas storage device itself comprising pipework (30) and at least one tank (60), with at least one check valve (34-36, 33) disposed between the pipework (30) and the tank (60), the system being **characterized in that** it comprises a pressure-measuring device (51) suitable for connection to the filler hose (20) or to the pipework (30), a processor device (50) for processing values measured by the pressure-measuring device (51), and a display device (70) for displaying information supplied by the processor device (50), the device (50) for processing values measured by the pressure-measuring device (51) including means for controlling filling and suspending filling of the fuel gas storage device from the filling station (10), means for controlling the filling flow rate, a clock, and means for comparing the measured pressure relative to predetermined thresholds $S_i$ during periods in which filling is suspended.

10. A system according to claim 9, **characterized in that** the device (50) for processing values measured by the pressure-measuring device (52) further includes means for controlling the filler hose (20) connected to the filling station (10) when no gas storage device is connected thereto, so as to pressurize it up to a predetermined reference pressure value, for causing said pressurization to be suspended, and for acting selectively, after pressurization has been suspended, either to cause the display that a leak from the filling station (10) is present, or else repressurize the filler hose (20) up to a new predetermined reference pressure value greater than the preceding predetermined reference pressure value.

11. A system according to claim 9 or claim 10, **characterized in that** the device (50) for processing values measured by the pressure-measuring device (51) further includes means for analyzing the speed of the pressure drop measured by the pressure-measuring device (51) and means for comparing said pressure drop speed relative to a threshold value $S_v$ depending on the respective volumes of the pipework (30) and of the tank (60).

12. A system according to any one of claims 9 to 11, **characterized in that** it is applied to leak testing devices for storing natural gas used as fuel for vehicles.

FIG.1

FIG.4

FIG.2

EP 1 734 351 B1

FIG.3

101 — Mise en pression du système (borne/flexible) à P0

102 — Mesure de la pression après t0j

103 — Calcul de Delta P0 et comparaison avec le seuil acceptable

104 — DeltaP0> Seuil

105 — Diagnostic, recherche de la fuite sur le système (Borne/flexible), Changement flexible

AUTO-TEST

oui

non

111 — Mise en pression du système (borne/flexible) + (canalisation+réservoir) à Pi (Débits de remplissage variables)

112 — Mesure de la pression après tj

113 — Calcul de Delta Pi et comparaison avec le seuil acceptable

114 — DeltaPi>Seuil

oui

117 — Rupture de pente lors de la mise en pression

oui

118 — Fuite située au niveau des canalisations

non

non

119 — Caractérisation de la fuite

115 — Pi = Pax ou Parrêt

non

oui

116 — Le système (canalisation + réservoir) est étanche et rempli

120 — Remise en pression pour obtenir un équilibrage

121 — Localisation de la fuite

122 — Détermination du débit de fuite = débit de remplissage

123 — Chute rapide de la pression

non

125 — Fuite située au niveau du réservoir

oui

124 — Fuite située au niveau des canalisations

15

FIG.5

FIG.6

**EP 1 734 351 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5866806 A